# EUROPEAN PATENT APPLICATION

(11) **EP 4 790 819 A1**
(43) Date of publication of application: **12.08.2026**
(21) Application number: 25783916.7
(22) Date of filing: 04.06.2025
(51) Int. Cl.: H01M 50/457, H01M 50/403, H01M 50/489, H01M 10/0525

(54) **SEPARATOR AND PREPARATION METHOD THEREFOR**

(30) Priority: 17.12.2024 CN 202411864335
(71) Applicant: Eve Energy Co., Ltd., Huizhou, Guangdong 516006 (CN)
(72) Inventor: HUANG, Yucheng, Huizhou, Guangdong 516006 (CN); LIU, Zhihua, Huizhou, Guangdong 516006 (CN); LONG, Feihong, Huizhou, Guangdong 516006 (CN); QIU, Xinbin, Huizhou, Guangdong 516006 (CN); ZHAO, Ruirui, Huizhou, Guangdong 516006 (CN)
(74) Representative: Berggren Oy
(86) International application number: PCT/CN2025/099176
(87) International publication number: WO 2026/129565

(57) **Abstract**

A separator and a preparation method thereof are provided in the present disclosure, which relate to a field of lithium battery technology. The separator includes: a first isolation layer, configured to contact with a positive electrode sheet of the lithium battery; a third isolation layer, configured to contact with a negative electrode sheet of the lithium battery; and a second isolation layer, provided between the first isolation layer and the third isolation layer; where the first isolation layer includes a ceramic material, the second isolation layer includes a polymer layer material, and the third isolation layer includes a modified polymer composite layer material.

## Description

The present disclosure claims priority to Chinese Patent Disclosure No. 202411864335.8 filed with the Chinese Patent Office on December 17, 2024. The entire disclosures of the above disclosures are incorporated by reference into the present disclosure.

### TECHNICAL FIELD

The present disclosure relates to the technical field of a lithium battery, and in particular to a separator and a preparation method thereof.

### BACKGROUND

A lithium battery is increasingly used as a power source for a capsule endoscope. However, a surface temperature of the lithium battery exceeds 120°C in the event of a short-circuit. If a short-circuit occurs during the operation of the capsule endoscope, its surface temperature will far exceed the limit that a human body can withstand.

### SUMMARY

In the prior art, an external fuse or a positive temperature coefficient material is generally applied to the lithium battery when dealing with the short-circuit. Although this approach can provide certain protection, it also inevitably increases an overall volume of the battery. The increase in the overall volume of the battery will reduce the volume energy density of the battery. For the devices such as the capsule endoscope that have extremely high volume utilization rate and energy requirements, the external protection methods are not applicable. Once the short-circuit of the lithium battery occurs during operation, it will cause serious medical accidents and pose a major threat to the safety of a patient.

The present disclosure provides a separator, including a first isolation layer, a second isolation layer and a third isolation layer. The first isolation layer is configured to contact with the positive electrode sheet of the lithium battery, the third isolation layer is configured to contact with a negative electrode sheet of the lithium battery, and the second isolation layer is provided between the first isolation layer and the third isolation layer. The first isolation layer includes a ceramic material, the second isolation layer includes a polymer layer material, and the third isolation layer includes a modified polymer composite layer material.

The present disclosure also provides a preparation method for a separator, which is applied to the above-mentioned lithium battery, and the preparation method includes preparing a third isolation layer, and the method of preparing the third isolation layer includes: mixing a modified polymer microsphere, a dispersant and a solvent to obtain a first mixed slurry; adding a binder and a thickener to the first mixed slurry and mixing them to obtain a second mixed slurry; adding the binder to the second mixed slurry again; coating the second mixed slurry on a surface of the second isolation layer, and getting a modified polymer composite layer by drying and cutting within a preset temperature range to obtain a third isolation layer, and the preset temperature range is 37°C to 85°C.

### Beneficial Effects

The separator provided in the present disclosure includes a first isolation layer in contact with the positive electrode sheet of the lithium battery, a third isolation layer in contact with the negative electrode sheet of the lithium battery, and a second isolation layer provided between the first isolation layer and the third isolation layer. Inside the battery, especially during the winding or lamination process, a mechanical stress will be generated between the positive and negative electrode sheets and by contact of the positive and negative electrode sheets with the separator, including extrusion, friction and impact. From a microstructural point of view, the ceramic material, due to its own lattice structure and high density, can effectively resist the burrs of the positive electrode from piercing the separator, protect the separator from damage, and thus reduce the risk of the short-circuit. In addition, a high thermal stability and a low thermal expansion coefficient of the ceramic material enable it to maintain structural integrity and stability in a high temperature environment inside the battery. In the case of battery charging, short-circuit or thermal runaway, the first isolation layer can withstand the high temperature and avoid shrinkage or melting of the separator due to thermal expansion, thereby preventing the short-circuit inside the battery and battery failures. This means that the first isolation layer can form a thermal protection barrier inside the battery to prevent high temperature from directly damaging the third isolation layer, while reducing the speed of heat conduction from the battery to the outside world, protecting the battery and external devices from thermal damage. Meanwhile, due to the microstructure of the first isolation layer, it can prevent direct contact between the positive and negative active materials inside the lithium battery, and effectively prevent the short-circuit from occurring even when the internal pressure of the battery changes or the minor mechanical damage occurs, ensuring the safe operation of the battery. The thermal runaway is a major threat to battery safety. It is usually caused by the internal short-circuit, overcharging or external overheating, causing the battery temperature to rise sharply. The heat dissipation capacity of the third isolation layer can dissipate off heat in time, reduce the internal temperature of the battery, and reduce the possibility of the thermal runaway. The heat dissipation capacity of the third isolation layer also helps to reduce the overall temperature inside the battery, especially to avoid overheating of the second isolation layer. Since the second isolation layer includes the polymer material, it has pores. Inside the battery, these pores can promote the flow of gas to form convection channels. When heat is generated inside the battery, convection can accelerate the distribution and dissipation of heat and serve to conduct the so as to reduce the risk of local overheating of the battery. When the temperature inside the battery is too high, the heat generated by the battery can melt the third isolation layer, block the pores in the second isolation layer, thereby closing the ion transmission channel in the second isolation layer.

In the preparation method of the separator provided in the present disclosure, the preparation of the first mixed slurry ensures the uniform dispersion of the modified polymer microsphere and the dispersant in the solvent, which is conducive to the formation of a uniformly distributed separator layer, improving the stability of the separator and avoiding agglomeration during the coating process; by adding a binder and a thickener to the first mixed slurry to form a second mixed slurry, the viscosity and fluidity of the slurry can be effectively adjusted to make it suitable for the coating process, ensure the smooth coating process, reduce defects, and improve production efficiency; the secondary addition of the binder can enhance the bonding force between the microsphere, which helps the structural integrity of the separator during the battery charge and discharge cycle, and reduce the damage to the separator caused by mechanical stress or electrochemical reaction; by precisely controlling the formulation ratio of the slurry and coating process, the porosity of the separator can be optimized to ensure the effective transmission of lithium ions, while maintaining the insulation properties of the separator and improving the electrochemical performance of the battery; the preset coating and drying temperature range (37°C to 85°C) is helpful to maintain the rheological properties of the slurry, ensure its uniform coating on the separator surface, avoid generation of cracks or holes during the drying process, and improve the uniformity and consistency of the separator. The modified polymer composite layer obtained by the above steps can effectively improve the electrochemical performance, mechanical stability and safety of the battery.

### BRIEF DESCRIPTION OF THE DRAWINGS

FIG.1 shows an internal schematic diagram of a lithium battery provided according to the present disclosure;
FIG.2 shows a schematic structural diagram of the separator provided in the present disclosure;
FIG. 3 shows a temperature comparison diagram in case of the battery short-circuit when the separator prepared by the present disclosure is used and the separator prepared by the present disclosure is not used.

The above drawings include the following reference symbols:
1. Battery casing; 2. Winding core; 3. First isolation layer; 4. Third isolation layer; 5. Second isolation layer; 6. Positive electrode tab; 7. Negative electrode tab.

### DETAILED DESCRIPTION

In the description of the present disclosure, unless otherwise clearly specified and limited, the terms "interconnected", "connected", and "fixed" should be understood in a broad sense. For example, it may be a fixed connection, a detachable connection, or an integral connection; it may also be a mechanical connection or an electrical connection; it may be a direct connection or an indirect connection through an intermediate medium, it may be the communication inside two elements or the interaction relationship between two elements. For one of ordinary skill in the present art, the specific meanings of the above terms in the present disclosure may be understood according to the specific circumstances.

In the present disclosure, unless otherwise clearly specified and limited, a first feature being "above" or "below" a second feature may include the first feature being direct contact with the second feature, or may include the first feature being not in contact with the second feature but being in contact with each other through another feature between them. Moreover, a first feature being "above", "on" and "over" a second feature includes the first feature being directly above and obliquely above the second feature, and the first feature having a higher horizontal height than the second feature. The first feature being "below", "under" and "underneath" a second feature includes the first feature being directly below and obliquely below the second feature, and the first feature having a lower horizontal height than the second feature.

In the description of the present embodiment, the directional or positional relationships such as the terms "upper", "lower", "left", "right", "front" and "behind" are based on the directional or positional relationships shown in the drawings, and are for the convenience of description and simplification of operation, rather than indicating or implying that the device or element referred to must have a specific direction, be constructed and operated in a specific direction, and therefore cannot be understood as limiting the present disclosure. In addition, the terms "first" and "second" are used to distinguish in the description and have no special meaning.

The lithium battery is increasingly used as a power source of the capsule endoscope. However, the surface temperature of lithium batteries exceeds 120°C in the case of a short-circuit. If the short-circuit occurs during the operation of the capsule endoscope, its surface temperature will far exceed the limit that the human body can withstand.

At present, the external fuse or the positive temperature coefficient material is generally used to deal with the short-circuit for the lithium battery. Although this approach can play a certain protective role, it also inevitably increases the overall volume of the battery, thereby reducing the volume energy density of the battery. There is a lack of effective short-circuit protection measures for the capsule endoscope. Once the short-circuit of the battery occurs, it may cause serious medical accidents and pose a major threat to patient safety.

The present disclosure firstly provides a separator, including: a first isolation layer 3, configured to contact with a positive electrode sheet of a lithium battery;
A third isolation layer 4, configured to contact with the negative electrode sheet of the lithium battery;
A second isolation layer 5, provided between the first isolation layer 3 and the third isolation layer 4;
The first isolation layer 3 includes a ceramic material, the second isolation layer 5 includes a polymer layer material, and the third isolation layer 4 includes the modified polymer composite layer material.

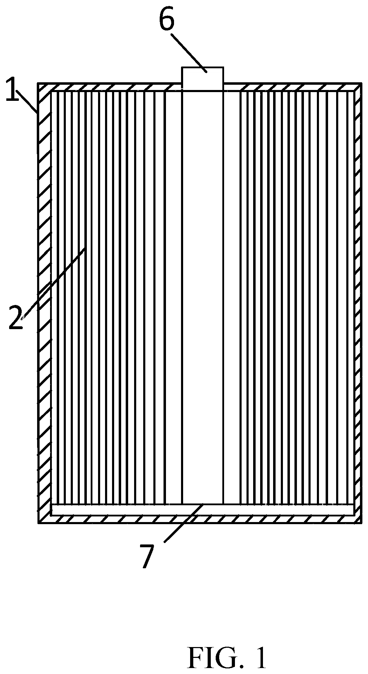

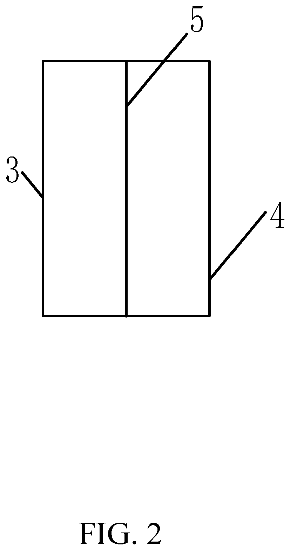

Specifically, as shown in FIG. 1 and FIG. 2, the structure of the lithium battery provided in the present disclosure includes a battery casing 1, a winding core 2 is provided inside the battery casing 1, the winding core 2 includes a positive electrode sheet, a negative electrode sheet and a separator, and the battery casing 1 may be connected to one of the electrode sheets, and the separator is provided between the positive electrode sheet and the negative electrode sheet to isolate the positive electrode sheet from the negative electrode sheet. Meanwhile, the winding core 2 in the present disclosure also includes a positive electrode tab 6 and a negative electrode tab 7, one end of all the positive electrode sheets can be gathered together through a bus bar to form a first contact end, the positive electrode tab 6 is connected to the first contact end, and the ends of all the negative electrode tabs 7 away from the first contact end can be gathered together through a bus bar to form a second contact end, and the negative electrode tab 7 is connected to the second contact end. The winding core further includes a cover group, the cover group includes a first cover sheet and a second cover sheet connected to the battery casing 1, and a first through hole is provided on the first cover sheet for exposing the positive electrode tab 6. The positive electrode tab 6 may be extended to the outside through the first through hole and connected to other devices to achieve power supply, and a second through hole is provided on the second cover sheet for exposing the negative electrode tab 7, and the negative electrode tab 7 may be connected to other external devices through the second through hole to achieve power supply. As shown in FIG.2, the separator in the present disclosure includes a first isolation layer 3 in contact with the positive electrode sheet of the lithium battery, a third isolation layer 4 in contact with the negative electrode sheet of the lithium battery, and a second isolation layer 5 provided between the first isolation layer 3 and the third isolation layer 4. Inside the battery, especially in the winding or lamination process, mechanical stresses, including extrusion, friction and impact, will be generated between the positive and negative electrode sheets and by contact of the positive and negative electrode sheets with the separator. From a microscopic structural point of view, the ceramic material, due to its own lattice structure and high density characteristics, can effectively resist the burrs of the positive electrode from piercing the separator and protect the separator from damage, thus reducing the risk of the short-circuit.

In addition, the high thermal stability and the low thermal expansion coefficient of the ceramic material enable it to maintain structural integrity and stability in the high temperature environment inside the battery. In case of over-charging, short-circuit or the thermal runaway of the battery, short-circuited or thermally runaway, the first isolation layer 3 can withstand high temperature and avoid shrinkage or melting of the separator due to thermal expansion, thereby preventing internal short-circuit and battery failure. This means that the first isolation layer 3 can form a thermal protection barrier inside the battery to prevent the high temperature from directly damaging the third isolation layer 4, while reducing the transmission speed of heat the inside of the battery to the outside world, protecting the battery and external equipment from thermal damage. Meanwhile, due to the microstructure of the first isolation layer, the first isolation layer can prohibit direct contact between the positive and negative active materials inside the lithium battery, which can effectively prevent occurrence of short-circuits even when the internal pressure of the battery changes or minor mechanical damage occurs, thereby ensuring the safe operation of the battery.

The thermal runaway is a major threat to battery safety. It is usually caused by internal short-circuit, overcharging or external overheating, resulting in the sharp rise of the battery temperature. The heat dissipation capacity of the third isolation layer 4 can dissipate off the heat in time, reduce the internal temperature of the battery, and reduce the possibility of the thermal runaway. Meanwhile, the heat dissipation capacity of the third isolation layer is also helpful to reduce the overall temperature inside the battery, especially to avoid overheating of the second isolation layer 5. Since the second isolation layer 5 includes polymer materials, the second isolation layer 5 has pores. Inside the battery, these pores can promote the flow of gas and form convection channels. When the heat is generated inside the battery, the convection can accelerate the distribution and dissipation of heat and serve to conduct heat, to reduce the risk of local overheating of the battery; when the temperature inside the battery is too high, the heat generated by the battery can melt the third isolation layer 4 and block the pores in the second isolation layer 5, thereby closing the ion transmission channel in the second isolation layer 5.

Although the use of the external fuse or the positive temperature coefficient material in the prior art can reduce the hazard of the short-circuit to a certain extent, it will increase the volume and mass of the battery and affect the energy density. This method is not ideal especially for the devices such as the capsule endoscope that has strict requirements on the volume and energy density. The technical solution in the present disclosure, through the improvement of the internal separator, can not only effectively control the short-circuit temperature rise, but also does not require additional volume, which is an efficient and safe short-circuit prevention means.

In addition, the separator in the present disclosure may be applied to a primary battery which includes but not limited to a lithium-manganese dioxide battery, a lithium-carbon fluoride battery, a lithium/iron disulfide battery and a lithium-thionyl chloride battery, and the like, and may be also applied in a secondary battery such as lithium cobalt oxide, lithium manganese oxide, lithium nickel oxide, lithium iron phosphate, nickel cobalt aluminum ternary, nickel cobalt manganese.

The separator in the present disclosure has addressed the problem of excessive short-circuit temperature rise of the lithium battery of the capsule endoscope. When the battery is short-circuited, the separator can respond quickly to reduce the short-circuit temperature rise within 50°C. In addition, the present disclosure forms a separator by providing the isolation layers with different materials, which can provide the prevention of the battery short-circuit without introducing an external device, without changing the battery volume and without reducing the overall energy density of the battery.

In some embodiments, the third isolation layer 4 is obtained by coating the composite slurry on the surface of the second isolation layer 5.

Specifically, when making the third isolation layer 4, it is required that the composite slurry is coated on the surface of the second isolation layer 5 and baked to obtain the third isolation layer 4. A uniform third isolation layer 4 is formed after coating and drying the components such as the modified polymer microsphere, the binder, the thickener, the dispersant and the solvent in the composite slurry. This layer of material can enhance the overall mechanical strength, thermal stability and electrolyte compatibility of the separator, thereby improving the safety and service life of the battery.

In some embodiments, the components of the composite slurry include a solvent and a solute. The solute includes the modified polymer layer microsphere after chemical modification, the binder, the thickener and the dispersant.

The method for modifying the thermal sensitivity of the polymer layer microsphere is surface modification, or changing the polymerization degree of the polymer layer microsphere.

Specifically, when modifying the thermal sensitivity of the polymer layer microsphere by surface modification, the thermal sensitivity of the polymer layer microsphere may be modified by selecting the compounds with thermal stabilizing groups such as a silane group as surface modifiers to improve the thermal sensitivity of the polymer layer microsphere. When improving the thermal sensitivity of the polymer layer microsphere by changing the polymerization degree, the polymerization degree of the polymer layer microsphere may be adjusted by controlling the polymerization conditions of the polymerization reaction, such as reaction temperature, time, etc., so that the polymerization degree is increased, because an increase in the polymerization degree means an increase in thermal stability. The increase in thermal stability means that in the condition of short-circuit or high temperature in the battery, the separator can be prevented from melting and shrinking, thereby effectively reducing the risk of thermal runaway. Specifically, when the battery surfers from short-circuit or high temperature, if the thermal stability of the third isolation layer 4 is poor, the case of softening or even melting will occur. After melting, the entire separator will lose its original pore structure and mechanical strength, resulting in direct contact between the positive and negative electrodes of the battery, thereby causing a serious short-circuit accident. Meanwhile, due to the softening or melting of the separator, it will result in the decease of the porosity, which will also affect the electrochemical properties of the battery and may also cause the overheat of the battery, increasing the risk of thermal runaway. Therefore, the third isolation layer 4 with enhanced thermal stability can still maintain its physical form and structure, as well as porosity at high temperatures, avoid softening and melting, and thus reduce the risk of short-circuit.

In some embodiments, the method of modifying the adhesiveness of the binder is any one of copolymerization modification and cross-linking treatment of the binder.

The method of modifying the thickening property of the thickener is to change the molecular weight of the thickener or to modify the structure of the thickener.

The method for modifying the dispersibility of the dispersant is to adjust any one of the initiator and the chain transfer agent of the dispersant, where the initiator and the chain transfer agent are used to change the molecular weight and molecular weight distribution of the dispersant.

Specifically, the main methods for modifying the adhesiveness of the binder are copolymerization modification or cross-linking treatment. When the copolymerization modification is used, its main purpose is to form covalent bonds or hydrogen bonds on the surface of the binder to increase the bonding strength between the binder and other materials and to maintain the stability of the internal structure of the battery, thereby reducing the risk of short-circuit and improving the safety of the battery under extreme conditions. Meanwhile, the strong adhesion force between the binder and other materials reduces the shedding of active substances and prolongs the cycle life of the battery. When cross-linking treatment is used, its main purpose is to introduce a cross-linking agent into the binder so that the molecular chains of the binder are connected by chemical bonds (such as covalent bonds) to form a network structure or a three-dimensional grid. The manner of the cross-linking treatment can enhance the mechanical strength of the binder to ensure the stability of the battery structure. Meanwhile, the cross-linking treatment can also adjust the porosity of the binder, optimize the contact between the electrolyte and the electrode material, and improve ion transmission, thereby improving the electrochemical performance and energy efficiency of the battery.

The thickening property of the thickener may be modified by changing the molecular weight of the thickener or modifying the structure of the thickener.

When the modification method is to change the molecular weight of the thickener, since the molecular weight of the thickener can directly affect its rheological properties in the solution, the thickener with a higher molecular weight has a longer molecular chain and can form a large number of entanglement points. These entanglement points can interact with each other in the solution to increase the viscosity of the solution. Meanwhile, the thickener with a higher molecular weight can keep the slurry stable for a long time and reduce particle sedimentation. When coating, a uniform coating can be formed to avoid uneven phenomena during the coating process, such as the phenomena of streaks, bubbles or uneven thickness.

When the modification method is to modify the structure of the thickener, the main methods include introducing hydrophilic or hydrophobic groups, changing the branching degree of the molecular chain or introducing reactive groups, etc. These structural modification methods can change the solubility, dispersibility and reactivity of the thickener in the solution, thereby affecting the thickening effect of the thickener, so as to improve the applicability of the thickener and other components in the slurry.

The method for modifying the dispersibility of the dispersant is to adjust any one of the initiator and chain transfer agent of the dispersant to change the molecular weight and molecular weight distribution of the dispersant; when the method is to adjust the initiator of the dispersant, since the initiator is the initiator of the polymerization reaction, it can initiate the polymerization reaction of the monomer to form a polymer molecular chain. Different types and concentrations of initiators will affect the mechanism and rate of the polymerization reaction, thereby affecting the molecular weight and molecular weight distribution of the final polymer (dispersant). The dispersant with higher molecular weights can form dense entanglements in the slurry due to their longer molecular chains and improve the wrapping and stabilizing effect on the particles, thereby improving the dispersion efficiency, such that the uniformity of the particles in the slurry is enhanced and agglomeration is reduced. Meanwhile, the adjustment of the molecular weight and molecular weight distribution can optimize the rheological properties of the slurry, so that the slurry has good operability and stability in processes such as coating and injection, and reduces energy consumption and material waste in the process.

In some embodiments, the polymer layer microsphere is any one of polypropylene, polyethylene, polyvinyl chloride, polyethylene terephthalate, and polystyrene.

Specifically, polypropylene is selected because it has a high melting point and good thermal stability, and can maintain structural stability within the operating temperature range of the battery to prevent the separator from melting. Meanwhile, polypropylene has good thermal stability to the chemical substances in the electrolyte and is not easily corroded or degraded, thereby extending the service life of the separator. For polyethylene, due to its own low density characteristics, the resulted final separator is relatively light and thin, which is beneficial to improve the energy density of the battery. Meanwhile, polyethylene is also an insulating material that can effectively prevent the direct flow of electrons between the positive and negative electrodes, thereby preventing internal short-circuit in the battery. Polyvinyl chloride has good tolerance to a variety of chemical substances and is suitable for a variety of electrolyte systems. Meanwhile, polyvinyl chloride is easily processed and shaped during the preparation of the separator, which can improve the production efficiency of the separator. In particular, since polyvinyl chloride contains chlorine, it has a certain flame retardancy, which can improve the safety of the battery. Polyethylene terephthalate has excellent mechanical strength and can withstand the pressure and stress during the battery cycle. Meanwhile, polyethylene terephthalate has a high melting point and good thermal stability, and can maintain structural stability at higher temperatures. The chemical structure of polystyrene makes it easy to be modified by co-chemical or physical methods to introduce specific functions, such as conductivity or flame retardancy.

In some embodiments, the binder is any one of polyvinylidene chloride, polyacrylic acid, carboxymethyl cellulose, styrene-butadiene rubber, polyvinyl alcohol, and polytetrafluoroethylene.

Specifically, polyvinylidene chloride has extremely strong chemical stability and solvent resistance, can remain stable in the battery electrolyte, and is not easily corroded or dissolved, thereby ensuring the structural characteristics of the electrode. Meanwhile, polyvinylidene chloride can remain stable within a wide voltage range and will not react with the electrode of the battery, thereby ensuring the electrochemical performance and safety of the battery. Polyacrylic acid has a hydrophilic property and can promote the wetting of the electrolyte in the electrode material to improve the transmission efficiency of lithium ions. Meanwhile, polyacrylic acid has also good adhesion and elasticity, and can adapt to the volume changes of the electrode material during the battery cycle to maintain the structural integrity of the electrode; carboxymethyl cellulose is easily solubilized in water, which is convenient for the preparation of battery slurry to reduce production costs. Meanwhile, carboxymethyl cellulose can also improve the dispersibility of the active substance in the slurry to ensure uniformity of the electrode material during the coating process; styrene-butadiene rubber has good elasticity and can adapt to the volume change of the electrode material during the charge and discharge cycle to maintain the mechanical stability of the electrode. Meanwhile, styrene-butadiene rubber is also a relatively low-cost binder, which is conducive to cost savings; polyvinyl alcohol has good film-forming properties and can form a uniform protective layer on the surface of the electrode material to improve the stability of the electrode. Meanwhile, polyvinyl alcohol has good adhesion to the electrode material, which helps to maintain the structural integrity of the electrode during the battery cycle; polytetrafluoroethylene has extremely high chemical stability and can remain stable in harsh battery environment, improving battery safety. Meanwhile, due to the excellent heat resistance of polytetrafluoroethylene, it can maintain structural stability at high temperature and avoid safety degradation caused by increased temperature.

In some embodiments, the ratio of solute to solvent is from 1:1 to 1:9.

Specifically, within a reasonable range of the ratio of solute to solvent, the viscosity and fluidity of the slurry can be optimized. When a large amount of solvent is present, the fluidity of the slurry is enhanced, which is beneficial to the uniform mixing of the slurry and the subsequent coating process. The appropriate viscosity ensures that the slurry is neither too thin, resulting in a too thin coating layer that affects battery performance, nor too viscous, thereby increasing the difficulty of coating and energy consumption. Meanwhile, a high proportion of solvent can ensure that the solid particles are fully dispersed and reduce agglomeration, thereby improving the activity of the electrode material and the uniformity of the battery.

In some embodiments, the thickener is any one of sodium alginate, mica, carboxymethyl cellulose, and polyurethane.

Specifically, sodium alginate can significantly increase the viscosity of the slurry, improve its rheological properties, keep a stable shape during the coating process, and not easily flow, thereby improving accuracy and uniformity of coating; Meanwhile, sodium alginate is easily soluble in water and is suitable for the preparation of water-based slurries, which is beneficial to environmental protection and cost control. In addition, sodium alginate can form a stable gel-like structure in the slurry, which helps to maintain the uniform dispersion of the slurry components and reduce agglomeration; the flaky structure of mica can form an interlaced network structure in the slurry, increase the mechanical strength of the slurry, make it not easy to break during the coating process, and improve the structural integrity of the electrode material; in addition, mica has good thermal stability, which can maintain the stability of the slurry performance in the high temperature environment of the battery, avoiding the degradation of slurry performance caused due to increased temperature. Mica has also good electrical insulation properties, which helps to improve the safety of the battery; carboxymethyl cellulose can increase the viscosity and stability of the slurry by forming a hydrogen bond network, adjust the rheology of the slurry, and make it easy to coat. Meanwhile, carboxymethyl cellulose can also improve the dispersibility of solid particles in the slurry, while forming a bond with the particle surface, enhancing the adhesion and stability of the slurry, and facilitating the uniform coating of the electrode material; polyurethane has excellent elasticity, can adapt to the volume change of the electrode material during the charge and discharge process, maintain the stability of the electrode structure, and improve the cycle performance of the battery; polyurethane can form a good bond with a variety of electrode materials, enhance the bonding force between electrode materials, and improve the mechanical strength of the electrode; the introduction of polyurethane may adjust the rheology of the slurry, so that the slurry has good fluidity and stability during the coating process, reduce defects, and improve the coating quality. These materials are selected as thickeners before modification mainly because they can effectively adjust the rheological properties of the battery slurry, improve the viscosity and stability of the slurry, and ensure the performance requirements of the battery slurry during preparation and coating.

In some embodiments, the formulation ratio of the composite slurry is: the mass percentage of the modified polymer layer microsphere is 70%-99.99%, the mass percentage of the binder is 0%-10%, the mass percentage of the thickener is 0%-10%, and the mass percentage of the dispersant is 0%-10%.

Specifically, a high proportion of the modified polymer layer microsphere ensures that the separator has sufficient porosity, optimizes the transmission path of lithium ions, and thus improves the ionic conductivity and electrochemical performance of the battery. Although the modified polymer layer microsphere occupies a large proportion, an appropriate amount of the binder can significantly enhance the bonding force between the microsphere and improve the overall mechanical strength and stability of the separator. This enhancement helps the structural integrity of the separator during the battery cycle and reduces the breakage or deformation of the separator caused by mechanical damage or pressure changes, thereby improving the cycle life and safety of the battery; the presence of the thickener and the dispersant may adjust the rheological properties of the composite slurry to make it have a suitable viscosity and fluidity which is convenient to conduct the coating process, while the defects such as bubbles and uneven coating layers are reduced during the coating process, so as to improve the coating quality and efficiency of the electrode material. The dispersant can improve the dispersibility of solid particles in the slurry, ensure the uniform distribution of the modified polymer layer microsphere, the binder and the thickener in the slurry, avoid agglomeration, and improve the uniformity and consistency of the separator, which is thus beneficial to improve the performance and stability of the battery. By reducing the use amount of other additives (binders, thickeners, dispersants), and using the modified polymer layer microsphere as the main component, the high performance requirements of the separator can be ensured while reducing the production cost. This helps to achieve dual optimization of cost-effectiveness and battery performance in large-scale production.

The present disclosure also provides a preparation method for a separator, which is applied to the above-mentioned lithium battery. The preparation method includes preparing a third isolation layer. The preparation method for the third isolation layer includes:
Mixing the modified polymer microsphere, the dispersant and the solvent to obtain a first mixed slurry;
Adding a binder and a thickener to the first mixed slurry and mixing them to obtain a second mixed slurry;
Adding the binder again into the second mixed slurry;
Coating the second mixed slurry on the surface of the second insulating layer, and getting a modified polymer composite layer by drying and cutting within a preset temperature range to obtain a third insulating layer. The preset temperature range is 37°C to 85°C.

Specifically, firstly preparing the first mixed slurry: selecting (70%-99.99%) the modified polymer microsphere (such as Polypropylene PP, Polyethylene PE microsphere), selecting (0%-10%) the dispersant (such as carboxymethyl cellulose CMC or polyurethane PU), adding the above materials into a solvent (such as water, N-methyl pyrrolidone NMP, dimethyl sulfoxide DMSO) in which the proportion of the solvent is to ensure that other components are fully dispersed, and adopting a stirring device to stir the mixture evenly to form a first mixed slurry;
Preparing a second mixed slurry: adding a binder (such as poly(vinylidene fluoride) PVDF, poly(acrylic acid) PAA, poly(tetrafluoroethylene) PTFE) at a mass ratio of 0%-10% and a thickener (such as sodium alginate, mica) at a mass ratio of 0%-10% to the first mixed slurry, and performing the sufficient stirring again to ensure that all components are evenly mixed to form a second mixed slurry;
Secondarily adding the binder: A small amount of binder can be added again as needed to enhance the bonding force between the microsphere, which helps to improve the mechanical stability and structural integrity of the separator;
Separator coating and treatment: evenly coating the second mixed slurry using a coating equipment on the surface of the second isolation layer (such as PP or PE polymer layer) to ensure the thickness and uniformity of the coating layer; drying the coated separator within a preset temperature range (37°C to 85°C) to remove the solvent and solidify the binder and thickener in the slurry to form a stable separator structure; after finishing drying, cutting the separator to meet the size requirements of the battery cell and obtain the final modified polymer composite layer.

The preparation of the first mixed slurry ensures the uniform dispersion of the modified polymer microsphere and the dispersant in the solvent, which is conducive to the formation of a uniformly distributed separator layer, improves the stability of the separator, and avoids occurrence of the agglomeration phenomena during the coating process; by adding the binder and the thickener to the first mixed slurry to form the second mixed slurry, the viscosity and fluidity of the slurry may be effectively adjusted to make it suitable for the coating process. This ensures the smooth coating process, reduce the defect, and improve production efficiency. The secondary addition of the binder can enhance the bonding force between the microsphere, which is helpful to the structural integrity of the separator during the battery charge and discharge cycle, and reduce the damage to the separator caused by mechanical stress or electrochemical reaction. By precisely controlling the formulation ratio and coating process of the slurry, the porosity of the separator can be optimized to ensure the effective transmission of lithium ions, while maintaining the insulation properties of the separator and improving the electrochemical performance of the battery. The preset coating and drying temperature range (37°C to 85°C) helps to maintain the rheological properties of the slurry, ensure its uniform coating on the separator surface, avoid occurrence of cracks or holes during the drying process, and improve the uniformity and consistency of the separator. The modified polymer composite layer obtained through the above steps can effectively improve the electrochemical performance, mechanical stability and safety of the battery.

The following Table 1 shows comparison results between the separator prepared in the present disclosure and the common ceramic separator in the prior art:

**Table 1**

| Test items | Separator in the present disclosure | | | Ordinary ceramic separator | | |
|---|---|---|---|---|---|---|
| Thickness (µm) | 20.2 | 20.0 | 20.0 | 20 | 20 | 20 |
| Area density (g/cm²) | 15.82 | 15.87 | 15.95 | 14.39 | 14.58 | 14.53 |
| Puncture strength (N) | 9.61 | 9.70 | 9.57 | 5.88-8.83 | | |
| Tensile strength MD (MPa) | 147.33 | 140.37 | 147.11 | 149.35 | 152.78 | 143.69 |
| Tensile strength TD (MPa) | 135.36 | 128.31 | 131.72 | / | / | / |
| Elongation MD (%) | 127.17 | 103.78 | 117.00 | 138.62 | 145.34 | 125.06 |
| Elongation TD (%) | 154.34 | 129.12 | 134.45 | / | / | / |
| Thermal shrinkage MD (%) (105°C) | 0.3 | 0.2 | 0 | 0.5 | 0.5 | 0.6 |
| Thermal shrinkage TD (%) (105°C) | 0 | 0 | 0 | 0.3 | 0.4 | 0.4 |
| Thermal shrinkage MD (%) (130°C) | 2.0 | 1.5 | 2.3 | 1.5 | 2.5 | 2.1 |
| Thermal shrinkage TD (%) (130°C) | 3.0 | 1.0 | 1.2 | 1.0 | 0.9 | 1.2 |

As shown in Table 1, it may be clearly concluded that, under the premise that the thickness of the separator in the present disclosure is consistent with that of the common ceramic material, the surface density, puncture strength, tensile strength TD, and elongation TD are all higher than those of the ordinary ceramic material, and the tensile strength MD, elongation MD, thermal shrinkage MD, and thermal shrinkage TD are all lower than those of the ordinary ceramic materials. The increase in the surface density of the separator means that the mass of the separator per unit area increases, which can improve the mechanical strength and thermal stability of the separator, making it less likely to have internal structural damage in the case of a short-circuit, thereby effectively preventing the conduction of the short-circuit current and reducing the short-circuit temperature rise. The enhanced puncture strength of the separator ensures that during the manufacturing and use process of the battery, even if there is an unexpected puncture or extrusion, the separator is not easily damaged, the safety of the battery is improved and the probability of short-circuit accidents is reduced. The increase in tensile strength TD (cross-web direction) strengthens the lateral strength of the separator during the battery winding process, helps the separator to remain stable inside the battery and reduces the possibility of internal micro-short-circuits, indirectly controlling the temperature rise of the battery in a short-circuit state. The decrease in tensile strength MD and elongation MD (machine direction) makes it difficult for the separator to produce mechanical deformation and displacement inside the battery, which is conducive to maintaining the structural stability inside the battery cell and reducing thermal runaway caused by changes in the internal structure, thereby reducing the temperature rise during short-circuit. The decrease in the thermal shrinkage performance of the separator (MD and TD directions) ensures that the separator will not shrink due to temperature increase when the battery is running or short-circuited, avoid direct contact between the positive and negative electrodes to cause a short-circuit, and effectively control the temperature rise during the short-circuit process. The decrease in elongation in the TD direction, in synergy with the increase in tensile strength TD, enhances the stability of the separator inside the battery, reduces the risk of thermal runaway caused by separator deformation, and thus helps control the temperature rise during short-circuit.

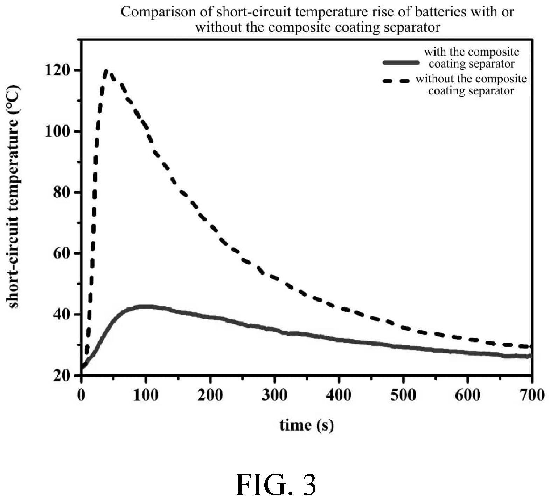

As shown in FIG. 3, the solid line represents a lithium battery using the separator prepared by the present disclosure, and the dotted line represents a lithium battery not using the separator prepared by the present disclosure. It can be clearly seen that the lithium battery equipped with the separator prepared by the present disclosure can reduce the temperature rise of the battery to within 50°C when a short-circuit occurs, compared with the prior art, thereby providing effective protection for the lithium battery.

In summary, by the separator in the present disclosure, the problem of excessive short-circuit temperature rise of the lithium battery within the capsule endoscope has been addressed, and the separator can respond quickly when the battery is short-circuited to reduce the short-circuit temperature rise to less than 50°C. In addition, the present disclosure forms a separator by providing the isolation layers with different materials, which can provide battery short-circuit protection without introducing an external device, without changing the battery volume and without reducing the overall energy density of the battery.

## Claims

1. A separator, comprising:
a first isolation layer (3), configured to contact with a positive electrode sheet of a lithium battery;
a third isolation layer (4), configured to contact with a negative electrode sheet of the lithium battery;
a second isolation layer (5), provided between the first isolation layer (3) and the third isolation layer (4);
wherein the first isolation layer (3) comprises a ceramic material, the third isolation layer (4) comprises a modified polymer composite layer material, and the second isolation layer (5) comprises a polymer layer material.

2. The separator according to claim 1, wherein the third isolation layer (4) is obtained by coating a composite slurry on a surface of the second isolation layer (5).

3. The separator according to claim 1 or 2, wherein components of the composite slurry comprise a solvent and a solute, and the solute comprises a modified polymer layer microsphere by chemical modification, a binder, a thickener, and a dispersant.

4. The separator according to claim 3, wherein a method for modifying a thermal sensitivity of the polymer layer microsphere is surface modification, or changing a polymerization degree of the polymer layer microsphere.

5. The separator according to claim 3 or 4, wherein a method for modifying an adhesiveness of the binder is any one of copolymerization modification and cross-linking treatment of the binder.

6. The separator according to any one of claims 3 to 5, wherein a method for modifying a thickening property of the thickener is any one of changing a molecular weight of the thickener or modifying a structure of the thickener.

7. The separator according to any one of claims 3 to 6, wherein a method for modifying a dispersibility of the dispersant is to adjust any one of an initiator and a chain transfer agent of the dispersant,
wherein the initiator and the chain transfer agent are configured to change a molecular weight and a molecular weight distribution of the dispersant.

8. The separator according to any one of claims 3 to 7, wherein the polymer layer microsphere is any one of polypropylene, polyethylene, polyvinyl chloride, polyethylene terephthalate, and polystyrene.

9. The separator according to any one of claims 3 to 8, wherein the binder is any one of polyvinylidene chloride, polyacrylic acid, carboxymethyl cellulose, styrene-butadiene rubber, polyvinyl alcohol and polytetrafluoroethylene.

10. The separator according to any one of claims 3 to 9, wherein a ratio of the solute to the solvent is 1:1 to 1:9.

11. The separator according to any one of claims 3 to 10, wherein the thickener is any one of sodium alginate, mica, carboxymethyl cellulose and polyurethane.

12. The separator according to any one of claims 3 to 11, wherein a formulation ratio of the composite slurry is that: a mass percentage of the modified polymer layer microsphere is 70%-99.99%, a mass percentage of the binder is 0%-10%, a mass percentage of the thickener is 0%-10%, and a mass percentage of the dispersant is 0%-10%.

13. A preparation method for a separator, the method being applied to the separator according to any one of claims 1-12, the method comprising:
preparing the third isolation layer, wherein a preparation method for the third isolation layer comprises:
mixing a modified polymer microsphere, a dispersant and a solvent to obtain a first mixed slurry;
adding a binder and a thickener to the first mixed slurry and mixing them to obtain a second mixed slurry;
adding the binder again to the second mixed slurry;
coating the second mixed slurry on a surface of the second isolation layer, and getting a modified polymer composite layer by drying and cutting within a preset temperature range to obtain the third isolation layer, wherein the preset temperature range is 37°C to 85°C.

14. The preparation method for the separator according to claim 13, wherein the mixing the modified polymer microsphere, the dispersant and the solvent to obtain a first mixed slurry comprises:
adding the modified polymer microsphere at a mass percent of 70%-99.99% and a dispersant at a mass percent of 0%-10% to the solvent, wherein a proportion of the solvent is to ensure sufficient dispersion of other components, and forming the first mixed slurry after stirring and mixing.

15. The preparation method for the separator according to claim 13 or 14, wherein the adding the binder and the thickener to the first mixed slurry and mixing them to obtain a second mixed slurry comprises:
adding the binder at a mass percent of 0%-10% and the thickener at a mass percent of 0%-10% to the first mixed slurry, and forming the second mixed slurry after stirring and mixing.
